**Europäisches Patentamt**

**European Patent Office**

**Office européen des brevets**

(19)

(11) Numéro de publication: **0 264 930**
**B1**

(12) **FASCICULE DE BREVET EUROPEEN**

(45) Date de publication du fascicule du brevet:
**17.10.90**

(51) Int. Cl.⁵: **B65H 75/14**

(21) Numéro de dépôt: **87115421.7**

(22) Date de dépôt: **21.10.87**

(54) **Touret en bois pour le stockage de câbles.**

(30) Priorité: **22.10.86 FR 8614665**

(43) Date de publication de la demande:
**27.04.88 Bulletin 88/17**

(45) Mention de la délivrance du brevet:
**17.10.90 Bulletin 90/42**

(84) Etats contractants désignés:
**BE CH DE ES FR GB IT LI NL**

(56) Documents cités:
**AU-B- 517 177**
**BE-A- 677 095**
**DE-C- 828 734**
**US-A- 1 876 215**

(73) Titulaire: **SOCIETE NOUVELLE EUROCABLE, Plainfaing,
F-88230 Fraize(FR)**

(72) Inventeur: **Gaire, Bernard, La Bolle, F-88100 Saint
Dié(FR)**

(74) Mandataire: **Weinmiller, Jürgen et al,
Lennéstrasse 9 Postfach 24, D-8133 Feldafing(DE)**

ACTORUM AG

## Description

La présente invention concerne un touret en bois pour le stockage de câbles, comportant un tambour et deux joues latérales, chaque joue étant formée d'une couche interne de planches parallèles et d'une couche externe de planches croisées avec celles de la couche interne.

Ces tourets comportent très généralement, comme celui décrit dans le document AU-B 517 177, des joues formées de deux couches de planches identiques, mais croisées à 90°, solidarisées avec la face latérale correspondante du tambour par des boulons traversant les deux couches de planches munis de rondelles et d'écrous encastrés dans la couche externe de planches de façon à ne pas être en relief sur celle-ci.

On a également proposé dans le document US-A 1 876 215 de renforcer des joues en minces feuilles de bois de placage par deux planches épaisses se croisant à 90°, et dans le document DE-C 828 734 de renforcer le pourtour de joues en deux épaisseurs de planches par des éléments de planche périphériques.

De tels tourets sont d'un poids important. On a cherché sans succès jusqu'ici à réduire ce poids sans cependant réduire leur solidité.

La présente invention a pour but de procurer un touret en bois plus léger et d'une solidité au moins égale à celle des tourets connus.

Le touret en bois selon l'invention est caractérisé en ce que sa couche externe de planches comporte uniquement une planche centrale diamétrale croisée à 90° avec les planches composant la couche interne, deux segments circulaires extrêmes de bords parallèles à l'axe de la planche centrale diamétrale, et deux séries de deux segments se raccordant à ces segments circulaires extrêmes et à la planche centrale diamétrale, ces segments étant situés à la périphérie de la couche interne de planche.

Il répond en outre de préférence à la caractéristique suivante: Lorsque les joues latérales sont fixées au tambour par des boulons serrés sur les joues à l'aide d'écrous et de rondelles, les boulons ne traversent que la couche interne de planches, et les extrémités des boulons, ainsi que les écrous et les rondelles, sont en relief sur cette dernière, mais non par rapport à la planche centrale diamétrale de la couche externe. Il est décrit ci-après, à titre d'exemple et en référence aux figures du dessin annexé, un touret selon l'invention.

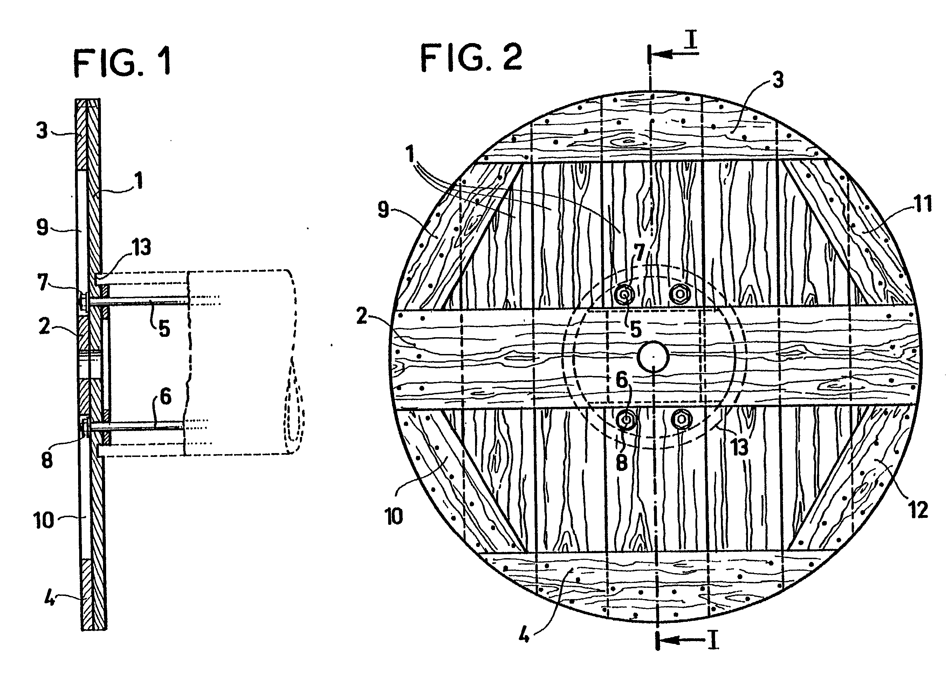

La figure 1 représente en coupe diamétrale selon l'axe I–I de la figure 2 une joue d'un touret.

La figure 2 représente cette même joue en élévation.

La joue du touret comprend une première couche de planches parallèles telles que 1. Sur cette première couche sont fixées par cloutage, d'une part une planche centrale diamétrale 2, d'autre part des segments circulaires 3 et 4, de bords parallèles à l'axe de la planche centrale, et 9, 10, 11, 12, se raccordant aux segments 3 et 4 et à la planche centrale. De l'autre côté, la joue est munie d'une gorge annulaire 13 destinée à recevoir le tambour.

Du fait du cloutage des segments sur la première couche de planches, la densité des clous sur le pourtour de la joue est plus élevée que dans une joue du touret connu, ce qui est favorable à la résistance de celles-ci aux contraintes survenant lors des manipulations.

Le tambour (non représenté) du touret, est inséré dans la gorge 13 au dos de la première couche de planches.

Des boulons tels que 5, 6, dont seule la partie proche de la joue a été représentée, viennent assurer la solidarisation de cette joue avec l'autre joue et la rigidité de l'ensemble. Le serrage des boulons est assuré dans chaque joue par des écrous et des rondelles plates tels que 7, 8. La longueur des boulons est choisie de façon que ni leurs extrémités, ni les écrous et les rondelles, ne soient en relief par rapport à la planche centrale. On évite ainsi d'avoir à utiliser des rondelles embouties dans les joues.

## Revendications

1. Touret en bois pour le stockage de câbles, comportant un tambour et deux joues latérales, chaque joue étant formée d'une couche interne de planches parallèles et d'une couche externe de planches croisées avec celles de la couche interne, caractérisé en ce que la couche externe de planches comporte uniquement une planche centrale diamétrale (2) croisée à 90° avec les planches composant la couche interne (1), deux segments circulaires extrêmes (3, 4) de bords parallèles à l'axe de la planche centrale diamétrale (2), et deux séries de deux segments (10, 11; 9, 12) se raccordant à ces segments circulaires extrêmes et à la planche centrale diamétrale, ces segments (3, 4; 9, 10, 11, 12) étant situés à la périphérie de la couche interne de planche.

2. Touret en bois selon la revendication 1, dans lequel les joues latérales sont fixées au tambour par des boulons (5, 6) serrés sur les joues à l'aide d'écrous et de rondelles (7, 8), caractérisé en ce que les boulons ne traversent que la couche interne de planches (1), et en ce que les extrémités des boulons, ainsi que les écrous et les rondelles, sont en relief su cette dernière, mais non par rapport à la planche centrale diamétrale (2) de la couche externe.

## Patentansprüche

1. Hölzerne Kabeltrommel zum Lagern von Kabeln, mit einem Zylinder und zwei Seitenwangen, wobei jede Wange aus einer inneren Schicht von parallelen Brettern und einer äußeren Schicht von Brettern gebildet ist, die sich mit denen der inneren Schicht kreuzen, dadurch gekennzeichnet, daß die äußere Bretterschicht nur ein diametrales zentrales Brett (2), das die die innere Schicht bildenden Brettern unter einem Winkel von 90° kreuzt, zwei End-Kreissegmente (3, 4), deren Ränder parallel zur Achse des diametralen zentralen Bretts (2) verlaufen, und zwei Reihen von zwei Segmenten (10, 11; 9, 12) aufweist, die sich an diese End-Kreissegmente und an das diametrale zentrale Brett anschließen, wobei diese Segmente (3, 4; 9, 10; 11, 12) sich an der Peripherie der inneren Bretterschicht befinden.

2. Hölzerne Kabeltrommel nach Anspruch 1, bei der die Seitenwangen durch Bolzen (5, 6) an dem Zylinder befestigt sind, welche mit Hilfe von Muttern und Unterlegscheiben (7, 8) auf die Wangen aufgeschraubt sind, dadurch gekennzeichnet, daß die Bolzen nur die innere Bretterschicht (1) durchqueren und daß die Enden der Bolzen und die Muttern und Unterlegscheiben über diese innere Schicht vorstehen, aber nicht über das zentrale diametrale Brett (2) der äußeren Schicht.

**Claims**

1. A wooden drum for storing cabels, the drum comprising a core and two side pieces, each side piece being constituted by an inside layer of parallel planks and an outside layer of planks crossing the planks of the inside layer, the drum being characterized in that the outside layer of planks comprises solely a central diametral plank (2) crossing the planks constituting the first layer (1) at 90°, two end circular segments (3, 4) having their edges parallel to the axis of the central diametral plank (2), and two series of two segments each (10, 11; 9, 12) meeting said end circular segments and the central diametral plank, said segments (3, 4; 9, 10, 11, 12) being situated at the periphery of the inside layer of planks.

2. A wooden drum according to claim 1, in which the side pieces are fixed to the core by bolts (5, 6) tightened against the side pieces by means of nuts and washers (7, 8), the drum being characterized in that the bolts pass through the inside layer of planks (1) only, and in that the ends of the bolts and the nuts and the washers stand proud relative thereto but not relative to the central diametral plank (2) of the outside layer.

FIG. 2

FIG. 1